# FASCICULE DE BREVET EUROPEEN

(11) **EP 0 554 142 B1**
(45) Date de publication et mention de la délivrance du brevet: **28.05.1997**
(21) Numéro de dépôt: 93400121.5
(22) Date de dépôt: 19.01.1993
(51) Int. Cl.: C08F 297/04, C08G 81/02

(54) **Procédé de fabrication en continu de copolymères à bloc vinylaromatique**
Verfahren zur kontinuierlichen Herstellung von Blockcopolymeren aus Vinylaromat
Method for the continuous production of vinyl aromatic block copolymers

(30) Priorité: 31.01.1992 FR 9201075
(43) Date de publication de la demande: 04.08.1993
(73) Titulaire: ELF ATOCHEM S.A., 92800 Puteaux (FR)
(72) Inventeur: Nicol, Pascal, F-64000 Pau (FR)

(56) Documents cités:
- EP-A- 0 457 647
- FR-A- 2 128 775
- US-A- 4 346 193
- US-A- 4 390 663
- US-A- 4 485 210

## Description

La présente invention concerne un procédé de fabrication en continu de copolymère bloc sous forme de résine vinylaromatique transparente résistant au choc ou d'élastomère séquencé vinylaromatique consistant à polymériser anioniquement en continu en milieu concentré un monomère vinylaromatique hydrocarboné dans un solvant aromatique hydrocarboné, le milieu polymérique formé étant, toujours en continu, copolymérisé avec un diène conjugué avant d'être traité par un composé polyfonctionnel possédant au moins deux fonctions capables de réagir avec les fonctions terminales du copolymère.

La copolymérisation anionique, en particulier pour la fabrication de copolymère bloc étoilé est connue et décrite dans de nombreux brevets dont un des plus représentatifs est le US-A 3 639 517. Selon ce document la copolymérisation anionique s'effectue en plusieurs étapes à des pressions suffisantes pour maintenir le milieu réactif fortement liquide. Bien qu'il soit précisé que la copolymérisation puisse se faire en absence de solvant, il est impossible de réaliser industriellement en phase sèche cette polymérisation anionique. En phase sèche, pour obtenir un milieu liquide apte à la polymérisation anionique, il est nécessaire de travailler à des températures supérieures à 180°C qui dégradent très rapidement et de manière irréversible les sites actifs. En conséquence, il serait nécessaire pour cette voie, d'utiliser des réacteurs à très faibles temps de séjour, de l'ordre de quelques dizaines de secondes. Un tel système est trop risqué du point de vue industriel. De ce document il ressort que, pratiquement, la copolymérisation anionique des monomères vinylaromatiques et diènes conjugués doit se faire en milieu fortement dilué. C'est d'ailleurs le cas pour le procédé en continu décrit dans le US-A 4 346 193. La copolymérisation anionique en milieu fortement dilué provoque, outre l'inconvénient de la manipulation d'une grande quantité de solvant qui nécessite des appareillages volumineux et des opérations complémentaires pour son élimination finale, une plus forte dégradation des sites actifs dans les masses polymériques que dans le cas d'une copolymérisation en milieu concentré.

Dans le FR-A 2 662 167 est décrit un procédé de fabrication de copolymères blocs consistant à copolymériser anioniquement en milieu solvant dans une première étape un monomère vinylaromatique hydrocarboné et dans une seconde étape un diène conjugué. Le procédé est caractérisé en ce que dans la première étape le monomère vinylaromatique hydrocarboné est polymérisé en solution dans un solvant aromatique hydrocarboné jusqu'à l'obtention d'un milieu homogène de viscosité supérieure à 300 Pa.s à 20°C pour une concentration dans le solvant aromatique hydrocarboné comprise entre 60 et 90 % en poids. Le procédé est également caractérisé en ce que dans une deuxième étape, après introduction de diène conjugué, la copolymérisation s'effectue jusqu'à l'obtention d'un milieu homogène de viscosité supérieure à 300 Pa.s à 90°C pour une concentration en copolymère dans le solvant aromatique hydrocarboné comprise entre 70 et 90 % en poids.

Le procédé selon la présente invention, perfectionnement du procédé du FR-A 2 662 167 précédent, permet d'obtenir des produits de transparence régulière quelle que soit la durée du cycle de fabrication du copolymère.

Selon le procédé, dans une batterie de réacteurs montés en série on alimente en continu un premier réacteur en monomère vinylaromatique hydrocarboné, en solvant aromatique hydrocarboné et en amorceur de polymérisation anionique de façon à fabriquer un polymère vinylaromatique sous forme de séquences vivantes. Simultanément on fait passer en continu dans un deuxième réacteur le polymère vinylaromatique formé de façon telle qu'afin de conserver un volume constant dans le premier réacteur le débit de sortie de la solution de polymère corresponde à la somme des débits d'entrée de chacun des composants introduits, tout en alimentant de façon continue ce deuxième réacteur en diène conjugué, et, éventuellement en solvant aromatique hydrocarboné, de façon à former un copolymère bloc vivant. Simultanément on fait passer en continu dans un troisième réacteur le copolymère bloc formé, de façon telle qu'afin de conserver un volume constant dans le deuxième réacteur le débit de sortie de la solution de copolymère corresponde à la somme des débits d'entrée de chacun des composants introduits, tout en alimentant de façon continue ce troisième réacteur en composé polyfonctionnel possédant au moins deux fonctions capables de réagir avec les fonctions terminales du copolymère. Simultanément on fait passer en continu la masse visqueuse homogène de copolymère dans un quatrième réacteur, dans lequel la température se trouve être supérieure à celle d'ébullition du solvant aromatique hydrocarboné, de façon telle, qu'afin de conserver un volume constant dans le troisième réacteur le débit de sortie de la masse visqueuse corresponde à la somme des débits d'entrée de chacun des composants introduits. Ce réacteur est habituellement un dégazeur flash constitué d'un préchauffer tubulaire encastré dans une chambre de dévolatilisation de forme cylindrique de 30 litres. Il peut fonctionner à des températures de 180 à 250°C et des pressions de 10 à 1000 mbars, préférentiellement de 200 à 220°C et 700 à 1000 mbars. En sortie du quatrième réacteur le copolymère récupéré en continu sous forme de masse fondue peut encore contenir des traces de solvant qui peuvent être éliminées de façon classique par extrusion dégazage ou encore par traitement à la vapeur du copolymère sous forme de granulés.

Le premier réacteur est alimenté en continu en monomère vinylaromatique hydrocarboné et en solvant aromatique hydrocarboné, de préférence en mélange, dans des proportions de 50 à 90 % en poids de monomère pour 10 à 50 % en poids de solvant. Simultanément on alimente le réacteur en initiateur de polymérisation anionique de façon telle qu'il se trouve toujours en quantité suffisante pour assurer un taux de conversion d'au moins 95 % du monomère et mieux d'au moins 99 %. Le rapport du débit de monomère vinylaromatique en grammes par heure sur le débit d'initiateur de polymérisation anionique en moles par heure pour une conversion totale du monomère est calculé en fonction de la masse moléculaire moyenne (Mn) du polymère que l'on souhaite obtenir. Habituellement l'initiateur de polymérisation anionique est introduit en continu simultanément au monomère vinylaromatique hydrocarboné. Lorsque les débits de monomère et d'initiateur sont parfaitement simultanés on obtient un polymère de type monomodal. Toutefois dans le cas où est souhaité l'obtention d'un polymère bimodal ou même polymodal l'initiateur de polymérisation anionique est introduit de façon intermittente dans le réacteur par injections successives dans des intervalles de temps donnés qui sont fonction de la quantité d'initiateur introduite à chaque injection par rapport à la quantité de monomère introduite en continu pendant la période d'injection à injection.

Dans ce type de polymérisation en continu le rapport de monomère sur initiateur est habituellement de 10000 à 150000 en g/mole et de préférence de 10000 à 100000 en g/mole.

Le milieu réactionnel est polymérisé dans un réacteur vertical parfaitement agité du type CSTR (continuous stirred tank reactor) à une température de 50°C à 110°C et de préférence de 70 à 90°C sous une pression maximum de 1 bar, une viscosité de 200 à 500 Pa.s du milieu réactionnel étant maintenue sensiblement constante. Le temps de séjour moyen des éléments réactionnels dans le réacteur entre leur entrée et leur sortie est habituellement de 1/2 à 3 heures de façon à ce que le taux de conversion du monomère vinylaromatique soit d'au moins 95 % et mieux d'au moins 99 %.

Le monomère vinylaromatique hydrocarboné utilisable dans cette étape de polymérisation contient de préférence de 8 à 18 atomes de carbone par molécule. Ce peut être par exemple le styrène, le 3-méthylstyrène, le 4-n-propylstyrène, le 4-cyclohexylstyrène, seuls ou en mélanges.

Afin d'obtenir un milieu visqueux homogène, il est recommandé d'utiliser comme solvant de l'éthylbenzène ou encore du toluène.

L'initiateur de polymérisation anionique peut être de façon classique un composé du lithium. Cet initiateur est décrit, en particulier, dans le US-A 3 317 918, le plus courant étant le n-butyllithium. Il peut être envoyé dans le réacteur en solution de préférence dans le solvant de polymérisation.

Au moyen d'un système de pompage classique, à un débit tel que le volume du milieu réactionnel reste constant dans le réacteur la solution visqueuse de polymère vivant formé est transporté en continu dans un deuxième réacteur alimenté simultanément en continu en diène conjugué. le réacteur de type CSTR ou encore de type tubulaire en écoulement piston PTFR (plug flow tubular reactor) est alimenté en diène conjugué à un débit adapté à celui du polymère vivant en fonction de la composition finale désirée du copolymère à former. De façon générale le rapport de débit de diène conjugué par rapport au polymère vinylaromatique vivant est compris entre 0,1 et 9. La température dans le milieu de copolymérisation est compris entre 70 et 120°C et de préférence entre 70 et 100°C sous une pression de 1 à 10 bars, une viscosité de 500 à 5000 Pa.s et mieux de 500 à 2000 Pa.s du milieu réactionnel étant maintenue sensiblement constante. Le temps de séjour moyen des éléments réactionnels dans le réacteur entre leur entrée et leur sortie est habituellement de 1 à 3 heures de façon à ce que le taux de conversion en copolymère soit d'au moins 95 % et mieux d'au moins 99 %.

Le diène conjugué peut être envoyé seul dans le réacteur, mais il peut également être en solution dans un solvant tel l'éthylbenzène ou le toluène, tout en prenant la précaution que cette solution permette de conserver dans le réacteur la viscosité minimum requise.

Le diène conjugué utilisable dans cette deuxième étape possède habituellement de 4 à 12 atomes de carbone dans sa molécule. Ce peut être par exemple le 1,3-butadiène, l'isoprène, le 2,3-diméthyl-1,3-butadiène.

Le copolymère vivant finalement obtenu contient habituellement de 10 à 90 parties de motifs de diène conjugué pour 90 à 10 parties de motifs de monomère vinylaromatique hydrocarboné.

Au moyen de système de pompage classique, à un débit tel que le volume du milieu réactionnel reste constant dans le réacteur, la solution visqueuse de copolymère vivant formé est transportée en continu dans un troisième réacteur alimenté simultanément en continu en agent de couplage. Cette réaction de couplage s'effectue dans un réacteur agité du type CSTR ou PFTR d'un volume utile dans un rapport de 0,5 à 3 du volume du réacteur de polymérisation du monomère vinylaromatique de la première étape. La quantité d'agent de couplage introduite est fonction de la quantité d'initiateur de polymérisation anionique introduite dans la première étape, sachant que pour au moins une fonction active de l'agent de couplage correspond une fonction active de l'amorceur de polymérisation anionique. Dans le cas où dans la première étape l'initiateur de polymérisation anionique est introduit de façon intermittente par injections périodiques dans le réacteur, pour que l'agent de couplage remplisse parfaitement son rôle, il est recommandé que la masse de solution copolymérique contenue dans ce troisième réacteur contienne au moins la quantité de copolymère formé pendant une période d'injection à injection d'initiateur de polymérisation anionique.

Cette opération de couplage peut s'effectuer à une température de 90 à 120°C. La réaction de couplage est pratiquement immédiate entre les fonctions actives de l'agent de couplage et les fonctions réactives terminales du copolymère. L'agent de couplage est un composé polyfonctionnel possédant au moins deux fonctions actives capables de réagir avec les fonctions terminales du copolymère vivant. Le composé polyfonctionnel possède cependant de préférence au moins trois fonctions réactives de façon à former des copolymères branchés en étoile. Ces composés polyfonctionnels sont décrits dans le US-A 3 281 383, ce sont par exemple des polyépoxydes tels que les huiles de lin ou de soja époxydées, ou encore les polyimines, les polyisocyanates, les polyaldéhydes, les polyhalogénures, les esters et polyesters comme l'acétate d'éthyle ou l'adipate de diéthyle. Cet agent de couplage peut être injecté en solution dans un solvant tel que l'éthylbenzène ou le toluène.

Au moyen de système de pompage classique, à un débit tel que le volume du milieu copolymérique reste constant dans le réacteur, la solution de copolymère est transportée dans un préchauffeur tubulaire vertical communiquant avec une chambre de dévolatilisation dans laquelle les conditions de température et de pression se trouvent être favorables à l'évaporation flash du solvant aromatique hydrocarboné. Cette opération peut s'effectuer à une température de 180 à 250°C. Le produit dégazé obtenu fondu en fond de chambre est transporté à l'extérieur vers un équipement de granulation, à un débit tel que la masse visqueuse dans le quatrième réacteur reste constante en volume.

Les milieux visqueux homogènes dans les réacteurs se présentent en une seule phase exempte de toute précipitation de matière. Les viscosités inférieures ou égales à 500 Pa.s peuvent être mesurées au moyen d'un appareil RHEOMAT 30 de type COUETTE, fonctionnant en écoulement permanent. Cet appareil est équipé d'un cellule de mesure DC50, dite autoclave. Ce type d'appareil est conforme à la norme NF-T51-211. Les viscosités supérieures ou égales à 500 Pa.s peuvent être mesurées au moyen d'un rhéomètre capillaire GOETTFERT (RHEOGRAPH 2002) avec un capillaire de 0,5 mm de diamètre et de 30 mm de longueur, le capteur de pression étant sous 290 bars et la vitesse de cisaillement de 10 à 1000 s⁻¹. Ces viscosités sont mesurées sous atmosphère inerte.

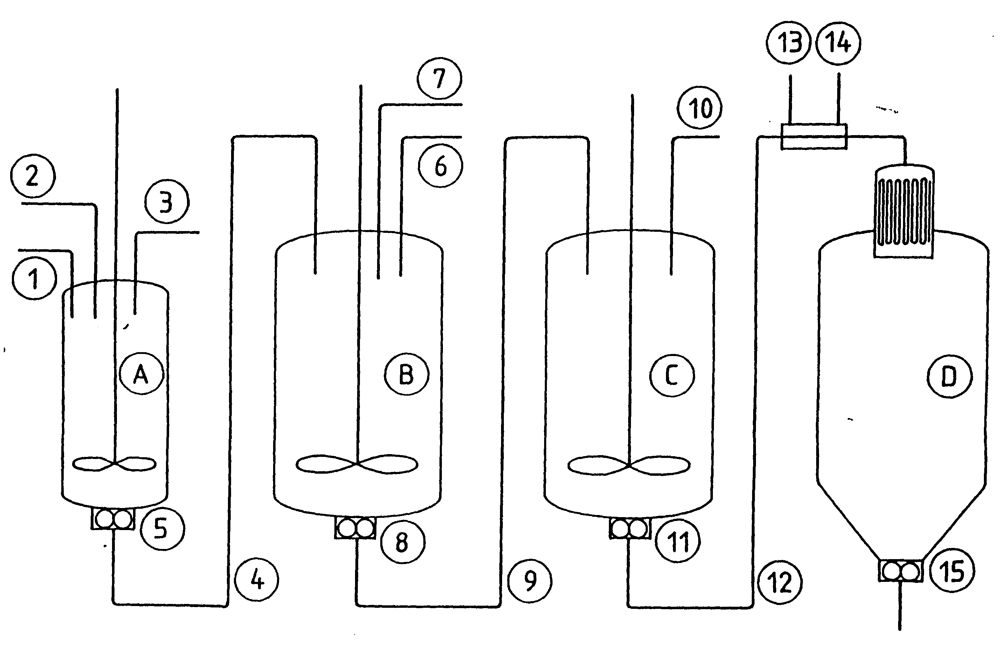

Dans la Figure annexée est schématisé l'ensemble de l'appareillage du procédé selon l'invention. Dans le réacteur A est polymérisé le monomère vinylaromatique arrivant par la tubulure 1, en présence de l'initiateur de polymérisation anionique arrivant par la tubulure 2. La polymérisation s'effectuant en présence de solvant, ce dernier arrive soit par la tubulure 1 en mélange avec le monomère soit séparément par la tubulure 3. La solution polymérique est transportée par la tubulure 4 au moyen d'une pompe 5 dans le réacteur B de copolymérisation dans lequel arrive également le diène conjugué par la tubulure 6 et éventuellement un autre monomère par la tubulure 7. Par la tubulure 9 au moyen de la pompe 8 la solution copolymérique est transportée dans le réacteur C dans lequel arrive par la tubulure 10 l'agent de couplage. Au moyen de la pompe 11 la solution de copolymère est envoyée à travers la tubulure 12 dans le surchauffeur dégazeur D après incorporation d'agent de terminaison de chaines, et, éventuellement, d'antioxydant par les tubulures 13 et 14. Au moyen de la pompe 15 le copolymère est envoyé vers l'extérieur sous forme de joncs, refroidis à l'eau et granulés.

Dans le cadre de l'invention, il est également possible de modifier l'appareillage pour fabriquer des polymères vinylaromatiques de structures différentes avant de les copolymériser avec le diène conjugué. Pour cela il est possible de monter en série entre le réacteur A et le réacteur B au moins un deuxième réacteur A' (non représenté), lui-même alimenté non seulement en solution polymérique du réacteur A mais encore en monomère vinylaromatique et en initiateur de polymérisation anionique, la nouvelle solution polymérique formée étant envoyée dans le réacteur B.

Il est encore également possible de monter en parallèle plusieurs systèmes de réacteur A pour fabriquer différents types de polymères servant à alimenter séparément le réacteur B.

Les exemples suivants illustrent l'invention sans toutefois la limiter.

### EXEMPLE 1 COMPARATIF

Dans un réacteur vertical parfaitement agité de 30 litres en acier inoxydable équipé d'une régulation de température et d'un agitateur du type double ruban couplé à un moteur de 0,55 kw, sont chargés, après une purge à l'azote et plusieurs lavages avec une solution de n.BuLi dans l'éthylbenzène, 3000 g d'éthylbenzène sec et 9,6 g de n.BuLi.

250 g de styrène sont introduits en moins de 5 minutes à une température comprise entre 20 et 30°C. La température s'élève à une valeur voisine de 50°C. Cette période d'amorçage n'excède pas 20 minutes. Sont alors introduits en continu 5000 g de styrène dans un temps inférieur à 2 heures. En à temps inférieur à 30 minutes la température s'élève à 70°C.

Cette température est maintenue pendant cette première étape de polymérisation du styrène. Lorsque la viscosité du milieu mesurée à 20°C atteint sensiblement 500 Pa.s sont introduits 1750 g de butadiène liquide. La température s'élève à environ 90°C et est maintenue à cette valeur pendant la polymérisation du butadiène.

La pression dans le réacteur est de 7 bars. Lorsque la viscosité du milieu, mesurée à 90°C atteint sensiblement 580 Pa.s, 38 g d'huile de soja époxydée (ESTABEX 2307 ® ) sont introduits dans le réacteur, la température restant maintenue à 90°C pendant environ 30 minutes.

Le copolymère est ensuite dégazé en une seule étape flash dans un système classique constitué d'un préchauffeur tubulaire encastré dans une chambre de dévolatilisation. Cette opération est réalisée à 200°C à une pression de 700 mbars et permet de générer des granulés d'une résine transparente dont la teneur résiduelle en solvant est comprise entre 1 et 2%. Ce solvant résiduel peut être éliminé par dégazage, soit par extrusion sous vide soit par étuvage des granulés sous vide, environ 100°C sous 15 mbars, ou encore par extraction (stripping) à l'eau sur les granulés. La teneur résiduelle finale en solvant est inférieure à 300 ppm.

Les masses moléculaires déterminées à partir des courbes GPC (chromatographie par perméation de gel ou gel perméation chromatography) pour les produits de chacune des étapes sont données dans le tableau suivant :

| | Mw | Mn | I |
|---|---|---|---|
| PS | 42 000 | 35 000 | 1.2 |
| SB | 60 000 | 46 000 | 1.3 |
| SB* | 122 000 | 72 000 | 1.7 |
| Mw = Masse moléculaire moyenne en poids Mn = Masse moléculaire moyenne en nombre I = Mw/Mn PS = Polystyrène de la première étape SB = Copolymère de la seconde étape SB* = Copolymère après traitement avec l'huile de soja époxy dée | | | |

Le copolymère de la seconde étape se présente sous la forme d'un seul pic (monomodal) comme le prévoit le modèle.

L'opération est répétée dix fois consécutives sans lavage du réacteur entre chaque opération. La quantité de granulés récupérés au terme de l'ensemble est de 67.5 Kg. Après chaque opération, on indique la transparence par une mesure de Haze réalisée avec un spectrocolorimètre COLORQUEST selon la norme ASTM D1003:

| | | | | | | | | | | |
|---|---|---|---|---|---|---|---|---|---|---|
| Op.N° | 1 | 2 | 3 | 4 | 5 | 6 | 7 | 8 | 9 | 10 |
| % Haze | 5 | 6 | 6 | 7 | 7 | 8 | 9 | 11 | 13 | 15 |

L'augmentation de l'indice de voile (Haze) atteste d'une détoriation de la transparence.

### EXEMPLE 2

Un réacteur vertical A parfaitement agité de 10 litres en acier inoxydable équipé d'une régulation de température et d'un agitateur du type double ruban couplé à un moteur de 0,55 Kw, est alimenté d'une part en mélange styrène-éthylbenzène à 64 % en poids de styrène avec un débit constant du mélange de 7,8 kg/h et d'autre part en n-butyllithium (n-BuLi) sous forme d'une solution à 1,6 mole/l⁻¹ dans l'éthylbenzène à un débit constant de 11 g/h de n-BuLi. Le volume réactionnel dans le réacteur est fixé à 8,7 litres de manière à fixer un temps de séjour moyen des réactifs de 1 heure. La température de la réaction est maintenue à 70°C. La viscosité est maintenue dans le milieu à 300 Pa.s.

Le taux de conversion du styrène est sensiblement de 100 %. Les caractéristiques moléculaires du polystyrène déterminées par GPC sont données dans le tableau suivant :

| | Mw | Mn | I |
|---|---|---|---|
| PS obtenu | 67 000 | 32 000 | 2.1 |
| PS du Modèle Théorique | 60 000 | 30 000 | 2.0 |

Le polystyrène présente un seul pic large I = 2.1 dont les caractéristiques sont très proches de la distribution la plus probable que prévoit le modèle.

Au moyen d'une pompe à engrenage est prélevé en continu à la base du réacteur A le mélange visqueux polystyrénique en quantité telle que le volume reste constant dans ledit réacteur et envoyé dans le réacteur B qui reçoit simultanément en continu à un débit constant de 1670 g/h du butadiène liquide. Le réacteur B de 30 litres est pour le reste identique au réacteur A. Le volume réactionnel dans B est maintenu constant à 12 litres de manière à fixer un temps de séjour moyen des réactifs de 1 heure. La température du milieu est maintenue à 77,3°C pour une pression de 2 bars absolus. La viscosité du milieu est maintenue à 690 Pa.s. Toujours au moyen d'une pompe à engrenage le mélange visqueux prélevé en continu est envoyé dans le réacteur C qui reçoit simultanément en continu à un débit constant 38,6 g/h de l'huile de soja époxydée (ESTABEX 2307). Le réacteur C est identique au réacteur B. Le volume réactionnel dans C est également maintenu constant à 12 litres.

Le copolymère couplé est ensuite antioxydé par un mélange IRGANOX 1076 ® -trinononylphénylphosphite en proportion de 1/2 à raison de 75 g/h du mélange avant d'être dégazé en continu dans les conditions identiques à celles de l'exemple 1.

| | Mw | Mn | I |
|---|---|---|---|
| SB | 102 000 | 54 000 | 1.9 |
| SB* | 154 000 | 82 000 | 1.9 |
| SB = copolymère de la deuxième étape SB* = copolymère après traitement avec l'huile de soja époxy dée. | | | |

Chaque distribution de masses se présente sous forme d'un seul pic.

Un lot de granulés est prélevé toutes les heures pendant 10 heures pour mesurer la transparence. Son évolution au cours du temps est donnée dans le tableau suivant :

| | | | | | | | | | |
|---|---|---|---|---|---|---|---|---|---|
| Temps (h) | 1 | 2 | 3 | 4 | 5 | 6 | 8 | 9 | 10 |
| % Haze | 6 | 5 | 5 | 6 | 7 | 5 | 5 | 6 | 6 |

Elle est constante à une valeur de l'ordre de 6 ce qui montre l'intérêt du procédé continu pour produire un état stationnaire des propriétés de transparence.

### EXEMPLE 3

Cet exemple est identique à l'exemple 2 à l'exception prés que le n-BuLi est injecté par intermittence à raison de 110 g/h pendant 12 minutes toutes les deux heures après la fin de l'injection précédente, et, que les temps de séjour dans les réacteurs B et C sont de 2 heures au lieu de 1 heure.

En fonctionnement continu les milieux réactionnels n'atteignent jamais un état stationnaire mais passent par des états transitoires qui se reproduisent exactement toutes les deux heures. Pour comparer avec les autres exemples des prélèvements aux différentes étapes ont été réalisés toutes les dix minutes sur deux heures mélangés à parts égales et analysés.

Les résultats en distribution de masses moléculaires sont donnés dans le tableau suivant :

| | Mw | Mn | I |
|---|---|---|---|
| PS | 86 000 | 33 000 | 2.6 |
| SB | 100 000 | 55 000 | 1.8 |
| SB* | 154 000 | 78 000 | 1.9 |

Les distributions obtenues pour le PS et le SB sont bimodales avant le couplage.

Les transparences obtenues avec les granulés de SB* collectés toutes les deux heures sont les suivantes :

| | | | | | |
|---|---|---|---|---|---|
| Temps (h) | 2 | 4 | 6 | 8 | 10 |
| % Haze | 6 | 7 | 7 | 7.5 | 6 |

## Revendications

1. Procédé de fabrication en continu de copolymère bloc sous forme de résine vinylaromatique transparente résistant au choc ou d'élastomère séquencé vinylaromatique consistant à alimenter en continu
a) un premier réacteur en monomère vinylaromatique hydrocarboné, en solvant aromatique hydrocarboné et en initiateur de polymérisation anionique, le rapport du monomère au solvant étant tel que la viscosité du milieu est maintenu entre 200 et 500 Pa.s pour une concentration en monomère de 50 à 90 % en poids pour 10 à 50 % en poids de solvant et le rapport de monomère sur initiateur étant de 10000 à 150000 g/mole,
b) un deuxième réacteur d'une part en solution visqueuse de polymère vivant provenant du premier réacteur, le monomère vinylaromatique ayant un taux de conversion d'au moins 95 %, à un débit tel que le volume du premier réacteur reste constant et d'autre part en diène conjugué de façon que le rapport de débit de diène conjugué par rapport au polymère vinylaromatique vivant soit adapté à la composition finale du copolymère à former et que la viscosité du milieu réactionnel soit maintenue sensiblement constante de 500 à 2000 Pa.s,
c) un troisième réacteur d'une part en solution visqueuse de copolymère vivant provenant du deuxième réacteur, au taux de conversion d'au moins 95 %, à un débit tel que le volume du deuxième réacteur reste constant, et, d'autre part en agent de couplage en quantité fonction de la quantité d'initiateur de polymérisation anionique initiale sachant que pour au moins une fonction active de l'agent de couplage correspond une fonction active de l'amorceur de polymérisation anionique.

2. Procédé selon la revendication 1 caractérisé en ce que l'initiateur de polymérisation anionique est introduit de façon intermittente par injections successives dans des intervalles de temps donnés qui sont fonction de la quantité d'initiateur introduit à chaque injection par rapport à la quantité de monomère introduite en continu pendant la période d'injection à injection.

3. Procédé selon l'une des revendications 1 ou 2 caractérisé en ce que la température de polymérisation du monomère vinylaromatique est de 50°C à 110°C pour une pression maximum de 1 bar, la température dans le milieu de copolymérisation étant compris entre 70 et 120°C pour une pression de 1 à 10 bars.

4. Procédé selon l'une des revendications 1 à 3 caractérisé en ce que le copolymère vivant contient de 10 à 90 parties de motifs de diène conjugué pour 90 à 10 parties de motifs de monomère vinylaromatique hydrocarboné.

5. Procédé selon l'une des revendications 2 à 4 caractérisé en ce que la masse de solution copolymérique contenue dans le troisième réacteur contient au moins la quantité de copolymère formé pendant une période d'injection à injection d'initiateur de polymérisation anionique.

6. Procédé selon l'une des revendications 1 à 5 caractérisé en ce que l'agent de couplage est un composé polyfonctionnel possédant au moins deux fonctions actives capables de réagir avec les fonctions terminales du copolymère vivant.

## Patentansprüche

1. Verfahren zur kontinuierlichen Herstellung eines Blockcopolymers in Form eines schlagzähen, transparenten vinylaromatischen Harzes oder eines vinylaromatischen Blockelastomers, bei dem kontinuierlich
a) in einen ersten Reaktor ein vinylaromatisches Kohlenwasserstoffmonomer in einem aromatischen Kohlenwasserstofflösemittel und ein anionischer Polymerisationsstarter eingebracht werden, wobei das Verhältnis von Monomer zu Lösemittel derart gewählt ist, daß die Viskosität des Milieus zwischen 200 und 500 Pa·s konstantgehalten wird bei einer Konzentration an Monomer von 50 bis 90 Gew.-% bei 10 bis 50 Gew.-% Lösemittel und das Verhältnis von Monomer zu Starter 10.000 bis 150.000 g/mol beträgt;
b) in einen zweiten Reaktor eingebracht werden: einerseits eine viskose Lösung eines lebenden Polymers, die aus dem ersten Reaktor stammt und wobei das vinylaromatische Monomer einen Umwandlungsgrad von mindestens 95 % hat, mit einem solchen Durchsatz, daß das Volumen des ersten Reaktors konstant bleibt, und andererseits ein konjugiertes Dien, so daß das Verhältnis des Durchsatzes an konjugiertem Dien in Bezug auf das lebende vinylaromatische Polymer an die Endzusammensetzung des zu bildenden Copolymers angepaßt ist und die Viskosität des Reaktionsmilieus nahezu zwischen 500 und 2.000 Pa·s konstantgehalten wird;
c) in einen dritten Reaktor eingebracht werden: einerseits eine viskose Lösung eines lebenden Copolymers mit einem Umwandlungsgrad von mindestens 95 %, die aus dem zweiten Reaktor stammt, mit einem solchen Durchsatz, daß das Volumen des zweiten Reaktors konstant bleibt, und andererseits ein Kupplungsmittel in einer Menge, die von der anfänglichen Menge des anionischen Polymerisationsstarters abhängt, wobei der mindestens einen aktiven Funktion des Kupplungsreagenzes eine aktive Funktion des anionischen Polymerisationsstarters entspricht.

2. Verfahren nach Anspruch 1, dadurch gekennzeichnet, daß der anionische Polymerisationsstarter periodisch mittels aufeinanderfolgender Einspritzungen in gegebenen Zeitintervallen eingebracht wird, die von der Menge an Initiator abhängen, der bei jeder Einspritzung in Bezug auf die Monomerenmenge eingebracht wird, die kontinuierlich während der Dauer von Injektion zu Injektion eingetragen wird.

3. Verfahren nach Anspruch 1 oder 2, dadurch gekennzeichnet, daß die Polymerisationstemperatur des vinylaromatischen Monomers 50 °C bis 110 °C bei einem Maximaldruck von 1 bar beträgt, wobei die Temperatur in dem Copolymerisationsmilieu zwischen 70 und 120 °C bei einem Druck von 1 bis 10 bar liegt.

4. Verfahren nach einem der Ansprüche 1 bis 3, dadurch gekennzeichnet, daß das lebende Copolymer 10 bis 90 Teile von Einheiten eines konjugierten Diens pro 90 bis 10 Teile von Einheiten eines vinylaromatischen Kohlenwasserstoffmonomers enthält.

5. Verfahren nach einem der Ansprüche 2 bis 4, dadurch gekennzeichnet, daß die Masse der in dem dritten Reaktor enthaltenen Copolymerenlösung mindestens die Menge an Copolymeren enthält, die während einer Periode von Injektion zu Injektion des anionischen Polymerisationsinitiators gebildet wird.

6. Verfahren nach einem der Ansprüche 1 bis 5, dadurch gekennzeichnet, daß das Kupplungsreagenz eine polyfunktionelle Verbindung ist, die mindestens zwei aktive Funktionen aufweist, die mit den endständigen Funktionen des lebenden Copolymers reagieren können.

## Claims

1. Process for the continuous production of a block copolymer in the form of a transparent impact-resistant vinylaromatic resin or of a sequential vinylaromatic elastomer which comprises the continuous feeding
a) of a first reactor with vinylaromatic hydrocarbon monomer, with aromatic hydrocarbon solvent and with anionic polymerization initiator, the ratio of the monomer to the solvent being such that the viscosity of the mixture is maintained between 200 and 500 Pa·s for a monomer concentration of 50 to 90 % by weight per 10 to 50 % by weight of solvent and the ratio of monomer to initiator being from 10,000 to 150,000 g/mol,
b) of a second reactor, on the one hand, with viscous living polymer solution originating from the first reactor, the vinylaromatic monomer having a degree of conversion of at least 95 %, at'a flow rate such that the volume of the first reactor remains constant and, on the other hand, with conjugated diene, so that the ratio of conjugated diene flow rate with respect to the living vinylaromatic polymer is adjusted to the final composition of the copolymer to be formed and so that the viscosity of the reaction mixture is kept substantially constant from 500 to 2,000 Pa·s,
c) of a third reactor, on the one hand, with viscous living copolymer solution originating from the second reactor, at a degree of conversion of at least 95 %, at a flow rate such that the volume of the second reactor remains constant and, on the other hand, with coupling agent in an amount which is a function of the amount of initial anionic polymerization initiator, it being known that, for at least one active functional group of the coupling agent, there corresponds an active functional group of the anionic polymerization initiator.

2. Process according to Claim 1, characterized in that the anionic polymerization initiator is introduced intermittently by successive injections at given time intervals which are a function of the amount of initiator introduced at each injection with respect to the amount of monomer continuously introduced during the period from injection to injection.

3. Process according to either of Claims 1 and 2, characterized in that the temperature for polymerization of the vinylaromatic monomer is from 50°C to 110°C for a maximum pressure of 1 bar, the temperature in the copolymerization mixture being between 70 and 120°C for a pressure of 1 to 10 bars.

4. Process according to one of Claims 1 to 3, characterized in that the living copolymer contains from 10 to 90 parts of conjugated diene units per 90 to 10 parts of vinylaromatic hydrocarbon monomer units.

5. Process according to one of Claims 2 to 4, characterized in that the mass of copolymer solution contained in the third reactor contains at least the amount of copolymer formed during a period from injection to injection of anionic polymerization initiator.

6. Process according to one of Claims 1 to 5, characterized in that the coupling agent is a polyfunctional compound possessing at least two active functional groups capable of reacting with the terminal functional groups of the living copolymer.
